# EUROPEAN PATENT APPLICATION

(11) **EP 1 717 716 A1**
(43) Date of publication of application: **02.11.2006**
(21) Application number: 05703516.4
(22) Date of filing: 13.01.2005
(51) Int. Cl.: G06F 17/30

(54) **INFORMATION TERMINAL, TIME TABLE INFORMATION DISPLAY PROGRAM, AND TIME TABLE INFORMATION DISPLAY METHOD**

(30) Priority: 10.02.2004 JP 2004033374
(71) Applicant: MATSUSHITA ELECTRIC INDUSTRIAL CO., LTD., Osaka 571-8501 (JP)
(72) Inventor: MATSUO, Hideaki Mat. Elec. Ind. Co., Ltd., IPROC, Chuo-ku, Osaka-shi, Osaka 540-6319 (JP); UMEYAMA, Katsuya Mat. Elec. Ind. Co., Ltd., IPROC, Chuo-ku, Osaka-shi, Osaka 540-6319 (JP); MAEDA, Akio Mat. Elec. Ind. Co., Ltd., IPROC, Chuo-ku, Osaka-shi, Osaka 540-6319 (JP); SEKIGUCHI, Takuya Mat. Elec. Ind. Co., Ltd., IPROC, Chuo-ku, Osaka-shi, Osaka 540-6319 (JP); YAMAMOTO, Takeshi Mat. Elec. Ind. Co., Ltd., IPROC, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/000277
(87) International publication number: WO 2005/076158

(57) **Abstract**

An information terminal, a timetable information display program, and a timetable information display method, capable of grasping easily desired timetable information are provided. A memory 50 for storing timetable data, a control portion 10 including a timetable data select portion 11 that has a function of acquiring present time information and comparing the timetable data with time information and a function of selecting partially the timetable data after a time specified based on the time information from the timetable data based on a compared result, and a image display portion 20 for displaying the selected timetable data and having a display modify portion 21 that changes a display mode of the selected timetable data in response to a time difference from the time information are provided.

## Description

### Technical Field

The present invention relates to an information terminal capable of displaying timetable information on a display portion, a timetable information display program, and a timetable information display method.

### Background Art

The mobile information terminal such as the cellular phone, or the like can now get easily necessary information irrespective of place and time by acquiring the information offered from the server on the Internet. Various functions and services of making active use of this advantage, applications to execute them, and the like are installed into the mobile information terminal. It is mentioned as an example of such advantage that timetable data (timetable information) of the traffic facilities leaving from a desired station or bus stop, or the like can be acquired. In recent years, a departure time information of the last train in the nearest station, or the like can be acquired by a function of the GPS (Global Positioning System) unit built in the mobile information terminal, based on the present position information of the mobile information terminal (see Non-Patent Literature 1, for example).
Non-Patent Literature 1: "A new service of "Ekimae Tanken Club" linked with a GPS navigation function", [online], [December 3, 2003 searched], Internet <URL:http://www.toshiba.co.jp./about/press/2001_12/pr_j0303.htm>;

### Disclosure of the Invention

### Problems that the Invention is to Solve

However, in the timetable data distribution service or the timetable data acquisition in the prior art, such a system is normal that, when the name of a station, or the like is designated based on the present position information of the GPS system or the user's input, either all the timetable data from the first departure to the last departure of the train departing from that station, and the like are distributed or only the information such as the first departure, the last departure, and the like limited in advance on the distributor side are distributed and then the mobile information terminal receives these data. Such system cannot selectively precisely provide/ acquire the information that the user desires. As a result, when the terminal station into which a plurality of traffic facilities enter, or the like is designated, in some cases the timetable data of unnecessary traffic facilities are also acquired or conversely the timetable data in a necessary time zone are not contained in the acquired data. Also, even when the timetable of a desired means of transportation is acquired, in some cases it is difficult for the user to grasp the necessary timetable data because the timetable data in an unnecessary time zone are contained in the data. In addition, an operation of confirming a present time and then finding the train departing after the present time, or the like from the acquired timetable data is required of the user of the mobile information terminal.

In contrast, such a utilization mode may be considered that a bulletin board in the station or a timetable printed on a paper is taken on a camera attached to the mobile information terminal and then only the timetable necessary for the user of the mobile information terminal is saved therein as the image. In this mode, the operation of finding the train departing from now, or the like from the timetable image is still required, like the above. Therefore, for example, in case an image of a large timetable on the bulletin board is picked up into a plurality of portions and saved, it takes much time to find the timetable image containing the timetable data of the present time, and others. As a result, the operation of finding the departure time becomes troublesome.

The present invention has been made in view of the above circumstances, and it is an object of the present invention to provide an information terminal capable of grasping exactly timetable information that the user needs, a timetable information display program, and a timetable information display method.

### Means for Solving the Problems

An information terminal of the present invention capable of displaying timetable information on a display portion, includes a storing unit for storing the timetable information; a time information acquiring unit for acquiring time information; a comparing unit for comparing the timetable information with the time information; a selecting unit for selecting partially the timetable information after a time specified based on the time information from the timetable information, based on a compared result; and a display controlling unit for causing the display portion to display the selected timetable information.

According to the above configuration, since the selecting unit for selecting partially the timetable information after a time specified based on the time information from the timetable information, based on a compared result between the timetable information and the time information is provided, the timetable information can be displayed partially. Therefore, the user can grasp exactly the necessary timetable information.

Also, in the information terminal of the present invention, the display controlling unit changes a display mode of the selected timetable information in response to a time difference from the time information. According to the above configuration, since the display mode is changed in response to the time difference, a priority can be assigned to the displayed timetable information respectively.

Also, the information terminal of the present invention further includes a timetable information acquiring unit for acquiring the timetable information. Also, in the information terminal of the present invention, the timetable information acquiring unit reads the timetable information from image data via character recognition. According to the above configuration, the timetable information can be acquired as the case may be. Also, since image data can be converted by the character recognition, an amount of data of the timetable information can be suppressed.

Also, the information terminal of the present invention further includes a timetable information selecting unit for selecting timetable information, which is compared with the time information, from the timetable information stored in the storing unit based on present position information and destination information. According to the above configuration, the timetable information required to reach the destination from the present position can be easily acquired from plural pieces of timetable information without user's input.

Also, a server of the present invention for transmitting timetable information, includes a transmitting unit for transmitting timetable information after a time specified based on time information from the timetable information that are selected partially from the timetable information based on a comparison between the timetable information and the time information.

Also a program of the present invention of causing a display portion to display timetable information, causes a computer to execute respective functions as a comparing unit for comparing the timetable information with time information, a selecting unit for selecting partially the timetable information after a time specified based on the time information from the timetable information, based on a compared result, and a display controlling unit for causing the display portion to display the selected timetable information.

Also, in the program of the present invention, the display controlling unit changes a display mode of the selected timetable information in response to a time difference from the time information.

Also, a method of the present invention of causing a display portion to display timetable information, includes comparing the timetable information with time information; selecting partially the timetable information after a time specified based on the time information from the timetable information, based on a compared result; and causing the display portion to display the selected timetable information.

Also, a method of the present invention of causing a display portion to display timetable information, includes comparing the timetable information with time information; selecting partially the timetable information after a time specified based on the time information from the timetable information, based on a compared result; changing a display mode of the selected timetable information in response to a difference from the time information as a criterion; and causing the display portion to display the timetable information the display mode of which is changed.

### Advantages of the Invention

According to the present invention, since the selecting unit for selecting partially the timetable information after a time specified based on the time information from the timetable information, based on a compared result between the timetable information and the time information is provided, the timetable information can be displayed partially. Therefore, the user can grasp exactly the necessary timetable information.

### Brief Description of the Drawings

[FIG.1] A view showing a schematic configuration of a mobile information terminal to explain an embodiment of the present invention.
[FIG.2] A flowchart explaining a timetable data acquiring method in the mobile information terminal shown in FIG.1.
[FIG.3] A view showing conceptually an image synthesizing process.
[FIG.4] A flowchart showing procedures in a character recognizing process.
[FIG.5] A flowchart showing timetable data displaying procedures of the mobile information terminal shown in FIG.1.
[FIG.6] A flowchart showing procedures in a timetable data extracting process.
[FIG.7] A view showing a display example of timetable data displayed on a display.
[FIG.8] A view showing a schematic configuration of a server to explain an embodiment of the present invention.
[FIG.9] A flowchart showing timetable data distributing procedures of the server shown in FIG.8.
[FIG.10] A flowchart showing procedures in the timetable data extracting process.

### Description of Reference Numerals

- 10: control portion
- 11: timetable data select portion
- 14: timetable data extract portion
- 21: display modify portion
- 30: GPS system
- 40: camera
- 50: memory
- 71: antenna
- 80: control portion
- 81: timetable data select portion
- 82: timetable data extract portion
- 83: display modify portion
- 90: memory
- 100: mobile information terminal
- 200: server

### Best Mode for Carrying Out the Invention

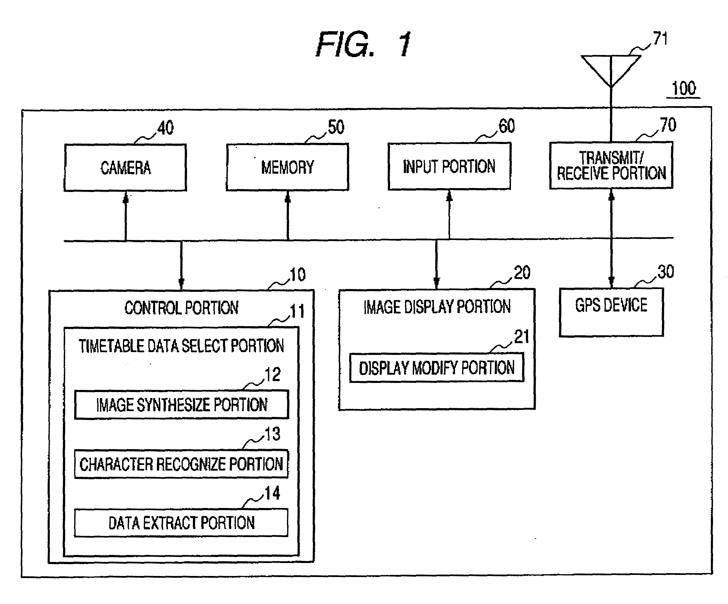

FIG.1 is a view showing a schematic configuration of a mobile information terminal to explain an embodiment of the present invention. A mobile information terminal 100 provides an information terminal capable of displaying timetable information on a display portion, and is constructed mainly by a control portion 10, an image display portion 20, a GPS device 30, a camera 40, a memory 50, an input portion 60, a transmit/receive portion 70, and the like.

The control portion 10 consisting of a CPU, or the like oversees/controls an overall operation of the mobile information terminal 100, and has a function of acquiring time information. Also, the control portion 10 includes a timetable data select portion 11 that has a function of comparing time information with timetable data and a function of selecting partially the timetable data after a time identified based on the time information from the timetable data based on the compared result. The image display portion 20 is composed of a display such as LCD, or the like to display the image and the text, and includes a display modify portion 21 that changes a display mode of the selected timetable information in response to a time difference from the time information.

The timetable data select portion 11 of the control portion 10 further includes an image synthesize portion 12 for synthesizing a plurality of timetable images being divided from the same timetable and picked up separately into one image, a character recognize portion 13 for reading timetable data from the timetable image as text (numerical value) data based on the character recognition, a data extract portion 14 for selecting the timetable data, which are to be compared with the time information, from plural types of timetable data stored in the memory 50 based on the present position information and the destination information, and the like. In this case, functions of respective portions are realized by executing various function controlling programs stored in the memory 50 by virtue of a CPU in the control portion 10. The control portion 10 and the display modify portion 21 cause the image display portion 20 to display the selected timetable data thereon.

The GPS device 30 is the unit to measure the present position of the mobile information terminal 100, and generates the present position information by the publicly known measuring approach. The camera 40 generates the timetable image by shooting the timetable. The memory 50 stores the timetable data, control programs for accomplishing respective functions of the mobile information terminal 100, the timetable image picked up by the camera 40, and the like therein. The input portion 60 is composed of a keyboard, or the like, and transfers the operator's input to the control portion 10. Also, the transmit/receive portion 70 has an antenna 71 and has a phone function of the mobile information terminal 100 and a data transmitting/receiving function.

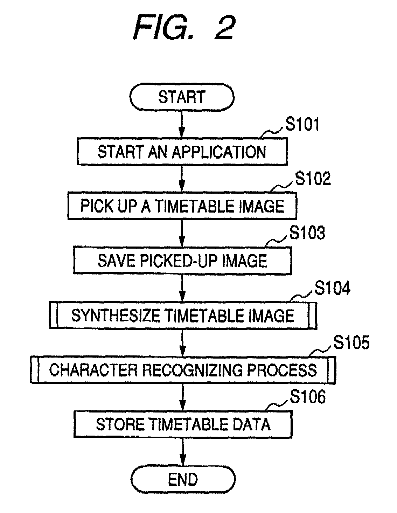

FIG.2 is a flowchart explaining a timetable data acquiring method in the mobile information terminal shown in FIG.1, and shows procedures of acquiring the timetable data when the timetable data are generated from the timetable image. At first, when an application for generating the timetable data is started (step S101), the control portion 10 displays to call upon the camera to pick up the timetable image, and the like. Then, when the operator of the mobile information terminal 100 takes an image of a bulletin board of the station or a timetable printed on a paper with the camera 40 (step S102), the control portion 10 saves the data of the timetable image in the memory 50 (step S103). Then, when the picked-up timetable image is divided into a plurality of image data, the control portion 10 starts a timetable image synthesizing process by the image synthesize portion 12 in response to a predetermined operator's input (step S104).

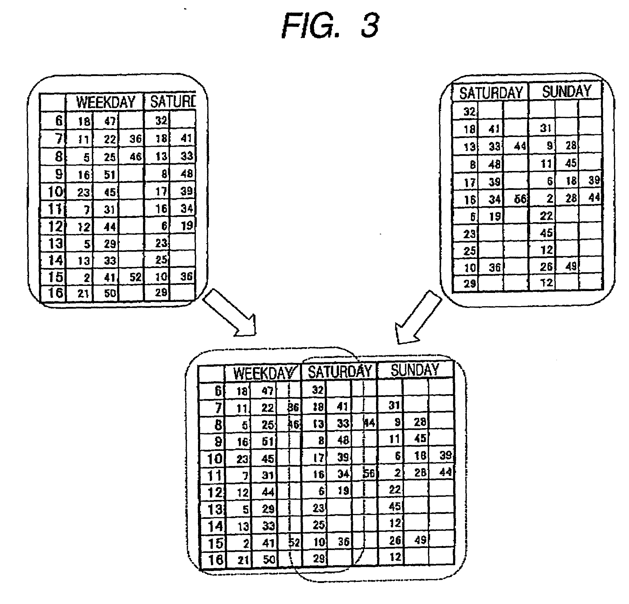

FIG.3 is a view showing conceptually the image synthesizing process. As shown in FIG.3, two timetable images picked up from the same timetable are synthesized to match both common portions with each other. Here, the publicly known merging method may be employed to synthesize the image. Then, the control portion 10 reads the timetable data (text data) from the synthesized image by the character recognize portion 13 (step S105).

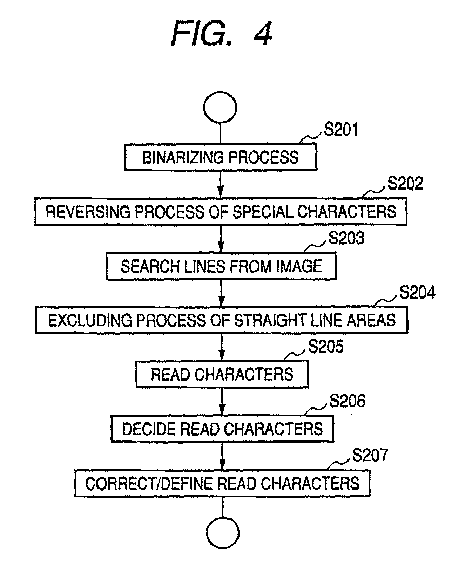

FIG.4 is a flowchart showing procedures in the character recognizing process and shows timetable data reading procedures in step S105 in FIG.2. At first, a binarizing process of the timetable image is carried out (step S201). Then, in order to make it possible to execute the character recognition about the reversed characters used often in the timetable, and the like, a reversing process of special characters is carried out (step S202). Then, the line search in the image is executed by the publicly known approach (step S203), and then straight line portions unnecessary for the character recognition are excluded (step S204). Then, the characters are read from the timetable image that is subjected to the above processes by the so-called OCR (Optical Character Recognition) function (step S205). Then, the decision of the read characters is made (step S206). Then, the misreading, etc. are corrected manually by the operator of the mobile information terminal and defined finally as the text data, and then the character recognition process is ended (step S207).

Returning to the flowchart in FIG.2, the timetable data recognized from the timetable image are stored in the memory 50 (step S106). According to the above procedures, the timetable data (text data) are acquired from the timetable image picked up by the camera and then stored.

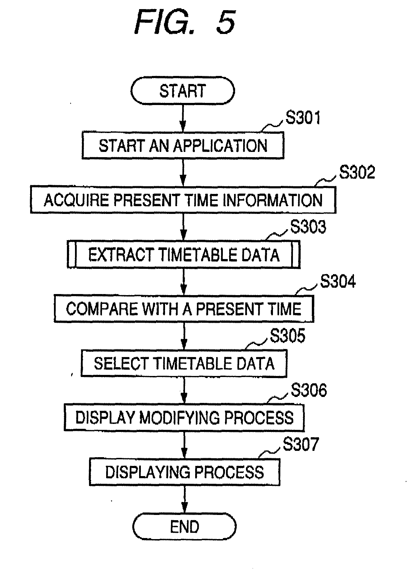

FIG.5 is a flowchart showing timetable data displaying procedures of the mobile information terminal shown in FIG.1. At first, when an application for the timetable data display is started (step S301), the control portion 10 acquires the present time information of the mobile information terminal 100 (step S302). Then, the control portion 10 extracts the timetable data appropriate for the selection object from plural pieces of timetable data (e.g., the timetable data concerning another station or another traffic facility) stored previously in the memory 50, based on the present position information, the destination information, or the like (step S303).

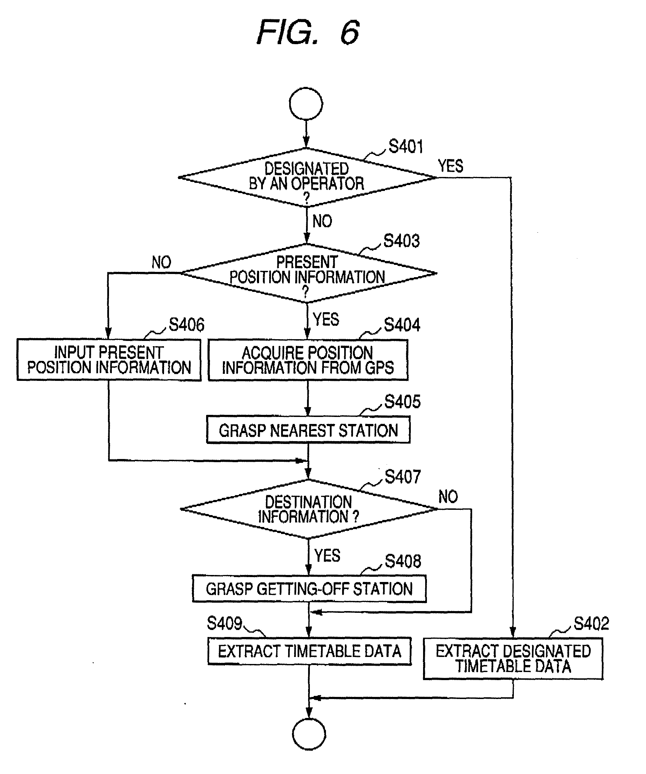

FIG.6 is a flowchart showing procedures in a timetable data extracting process. First, the control portion 10 decides whether or not the user of the mobile information terminal is going to designate the timetable data via the input portion 60 (step S401). If the designation is executed by the input, the control portion 10 extracts the designated timetable data (e.g., timetable data for a particular line in a particular station of a certain railway company) from the memory 50 (step S402). In contrast, if the designation is not executed by the input, the control portion 10 decides whether or not the present position information can be acquired (step S403). In the case of the mobile information terminal with a GPS function, the control portion acquires the present position information from the GPS (step S404), and then grasps the nearest station by the publicly known approach based on this position information (step S405). Also, in the case of the mobile information terminal without the GPS function, the control portion acquires the present position information from the operator's input of the mobile information terminal (step S406). Then, the control portion 10 decides whether or not the destination information, e.g., the name of the getting-off station, or the like is input (step S407). If the destination information is input, the control portion grasps the getting-off station based on the destination information (step S408).

According to the foregoing procedures, the control portion can grasp the line based on the boarding station (present position) and the getting-off (destination), for example. Therefore, the control portion 10 can extract the timetable data regarding this line from the memory 50 (step S409). Here, it is possible in practical use to extract the appropriate timetable data from plural pieces of timetable data stored in the memory 50, based on only the present position information.

Returning to the flowchart in FIG.5, the timetable data select portion 11 compares the extracted timetable data with present time information acquired in step S302 (step S304). Then, the timetable data select portion selects the timetable data after the present time (a time identified based on the time information) from the timetable data in a predetermined number, based on the compared result (step S305). In this case, the data after the present time may be selected upon choosing the timetable data. However, in case the departure time is one minute later from the present time, or the like, for example, the user has a very small chance that such user can catch the train. Therefore, a time after a predetermined time (e.g., 5 minute) has elapsed from now may be set previously as a specific time, and then the data listed after that specific time may be selected partially. With this selection, the user can select only the departure time information of the train at which the user can have enough time to take the train, or the like. Also, the number of selected data may be set previously in response to a size of the display of the image display portion 20 of the mobile information terminal 100, or the like. Also, a time input by the user (e.g., January 1, 10 am) may be employed as the specific time.

Then, a display modifying process is applied to the selected timetable data by the display modify portion 21 (step S306). This process fixes an order of priority to the timetable data by enlarging fonts of digits of the just coming departure time, coloring these fonts of digits in different color (e.g., red color display) from others, or the like, and modifies the timetable data into the display mode that the user is ready to grasp intuitively. In addition, an outstanding display may be set appropriately such that a blinking frequency of the fonts or the digits is increased in response to a decrease of the time left until the departure time, or the like. The timetable data to which the modifying process was applied may be displayed on the display of the image display portion 20 (step S307).

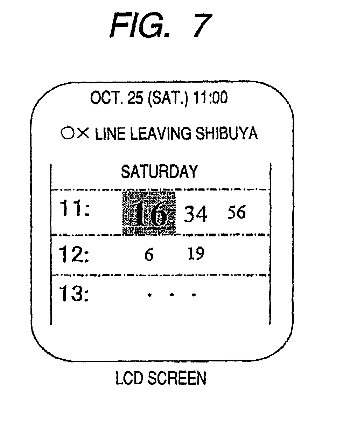

FIG.7 is a view showing a display example of the timetable data displayed on the display. As shown in FIG.7, a part of the timetable data after the present time is displayed, and also the digits of the just coming departure time are displayed by the large font on the colored background. Since the larger font is used to display as the departure time is sooner, the operator of the mobile information terminal can grasp intuitively the time left until the departure time. Here, it may be set that the timetable data the departure time of which has passed can be erased sequentially by the display updating operation. According to the above procedures, only the effective timetable data can be selected, and also the just coming departure time information can be displayed such that the user can grasp such information intuitively with the eye based on a difference in the display mode.

In the above, an explanation is made of the case where the timetable data are taken with the camera 40 built in the mobile information terminal 100 and the image is generated. But it is needless to say that the timetable data necessary for the user may be downloaded previously from the server on the Internet, or the like, which is connected to the mobile information terminal to communicate therewith, and stored in the memory 50 and then the required timetable data may be selected by the timetable data select portion 11 to display each time.

As described above, according to the embodiment of the present invention, the departure time information after the most effective present time is selected partially from the timetable image picked up by the camera built in the mobile information terminal or the timetable data acquired from the server on the Internet, or the like, and then displayed. Also, the highlighting, or the like is applied to the display in response to the time left to depart. Thus, the user can get easily exactly only the highly required information.

In the above, such a configuration is employed that the timetable data (text data) selected by the timetable data select portion 11 are displayed. But another configuration may be employed that the timetable image in the range in which the timetable data are contained is displayed based on the selected timetable data. In this case, the timetable data extracted from the timetable image is used only in the operation of selecting the timetable data based on the present time information, the present position information, and the destination information. Therefore, when an OCR function of the character recognize portion 13 is of low precision, for example, it is possible that the digits read in error are displayed as the timetable data. However, in case the timetable image is displayed, the correct timetable can be displayed on the display without such influence.

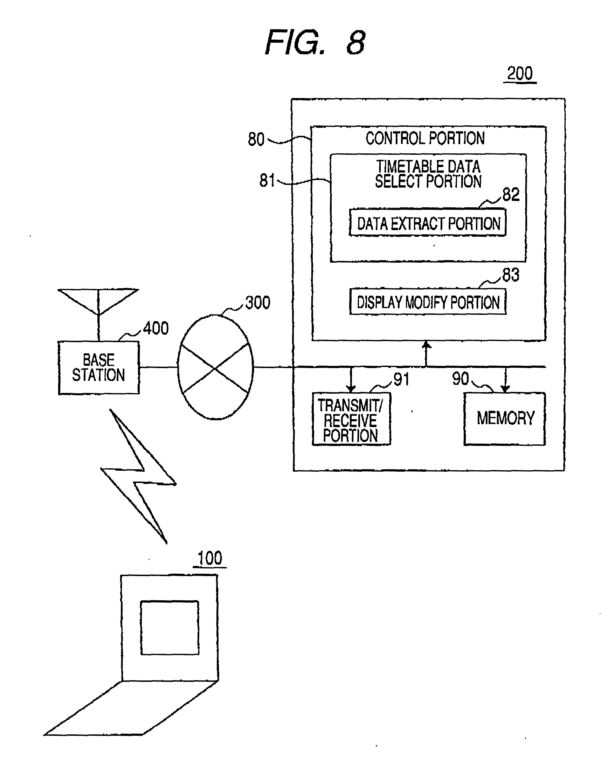

FIG.8 is a view showing a schematic configuration of a server to explain an embodiment of the present invention. A server 200 is used to transmit the timetable information, and is constructed mainly of a control portion 80, a memory 90, a transmit/receive portion 91, and the like.

The control portion 80 consisting of CPU, and the like is a block to oversee/control an overall operation of the server 200, and includes a timetable data select portion 81 described later, and a display modify portion 83 for applying a modifying process regarding the display such as highlighting, coloring, blinking, or the like to the text data.

The memory 90 stores the control programs used to implement respective functions of the server 200, the timetable data distributed to the mobile information terminals 100, and the like. The transmit/receive portion 91 is connected communicatively to the mobile information terminal 100 via the Internet 300, a terrestrial base station 400 of the mobile phone network, etc. to transmit/receive the data. The transmit/ receive portion 91 transmits the timetable data after the time that is identified based on the time information from the timetable data, which is selected partially from the timetable data based on the comparison between the timetable data stored in the memory 90 and the time information.

The timetable data select portion 81 of the control portion 80 has further a timetable data extract portion 82 that extracts the timetable data, which conform to the present position information, the destination information, etc. transmitted from the mobile information terminal 100, from plural types of timetable data. In this case, respective functions of the timetable data extract portion 82 and the display modify portion 83 can be realized by causing the CPU of the control portion 80 to execute respective function controlling programs stored in the memory 90.

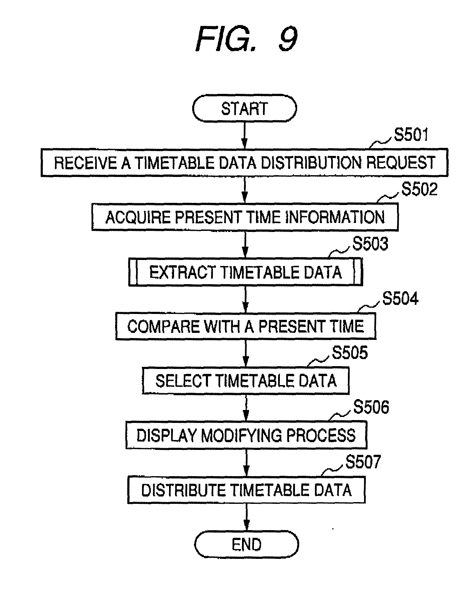

FIG.9 is a flowchart showing timetable data distributing procedures of the server shown in FIG.8. At first, when the control portion 80 of the server 200 receives a timetable data distribution request from the mobile information terminal 100 via the transmit/receive portion 91 (step S501), such control portion acquires the present time information (step S502). Then, such control portion extracts the timetable data, which are compared with the present time information, from plural pieces of timetable data stored previously in the memory 90 (e.g., the timetable data of another station or another traffic facility, and the like) based on the present position information, the destination information, etc. of the mobile information terminal transmitted simultaneously with the timetable data distribution request (step S503).

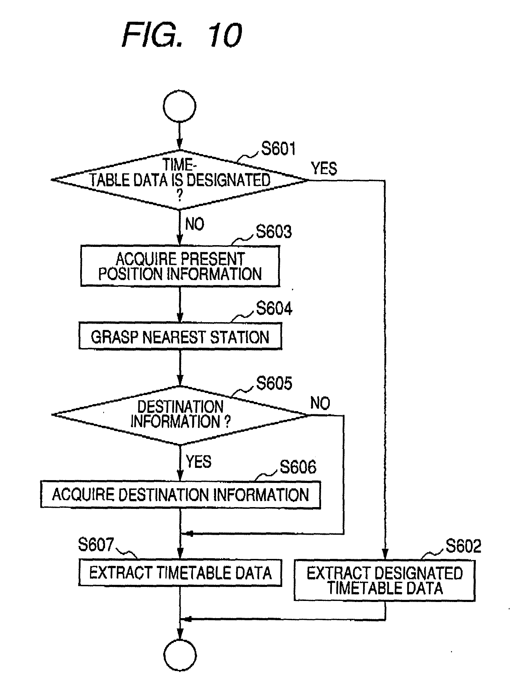

FIG. 10 is a flowchart showing procedures in the timetable data extracting process. At first, the control portion 80 decides whether or not such control portion has received the information designating the timetable data, which is to be compared with the present time information, from the mobile information terminal 100 (step S601). If such control portion has received the information, the control portion 80 extracts the designated timetable data (e.g., timetable data of a particular line in a particular station of a certain railway company) from the memory 90 (step S602). In contrast, if such control portion has not received the information, the control portion receives the present position information transmitted subsequently from the mobile information terminal (step S603), and grasps the nearest station by the publicly known approach based on this position information (step S604). Then, the control portion 80 decides whether or not such control portion has received the destination information such as the name of the getting-off station, for example (step S605). If the control portion has received the destination information, such control portion grasps the getting-off station based on the destination information (step S606).

According to the above procedures, since the control portion 80 can grasp the line based on the boarding station (present position) and the getting-off station (destination), for example, such control portion can extract the timetable data regarding the concerned line from the memory 90 (step S607). In this case, when only the present position information is transmitted from the mobile information terminal, such control portion cannot grasp the concerned line because it can know only the boarding station. Therefore, in case there are a plurality traffic facilities that enter into the concerned station, plural pieces of timetable data are extracted.

Returning to the flowchart in FIG.9, the timetable data select portion 81 compares the extracted timetable data with the present time information acquired in step S502 (step S504), and selects the timetable data after the present time in predetermined number (step S505). In this case, the data after the present time (specific time) may be selected partially in selecting the timetable data. However, in case the departure time is one minute later from the present time, or the like, for example, the user has a very small chance that such user can catch the train. Therefore, the time after a predetermined time (e.g., 5 minute) has elapsed from the present time may be set previously as the specific time, and then the data listed after that specific time may be selected partially. With this selection, the user can select only the departure time information of the train at which the user can have enough time to take the train, or the like. Also, the time input by the user (e.g., January 1, 10 am) may be employed as the specific time. Also, the number of selected data may be set previously arbitrarily by selecting the data within two hours from now, or the like.

Then, the display modifying process is applied to the partially selected timetable data by the display modify portion 83 (step S506). This process modifies the timetable data into the display mode that the user is ready to grasp intuitively, for example, by enlarging the fonts of digits of the just coming departure time, coloring these fonts of digits in different color (e.g., red color display) from others, or the like. In addition, the outstanding display may be set appropriately such that the blinking frequency of the fonts or the digits is increased in response to a decrease of the time left until the departure time, or the like. Then, the timetable data that were subjected to the modifying process are transmitted to the mobile information terminal 100 that transmitted the timetable data distributing request (step S607). According to the foregoing procedures, the effective timetable data can be selected partially and then the timetable data, to which the display modifying process is applied such that the user can grasp intuitively visually the just coming departure time information, can be distributed to the mobile information terminal. The user can grasp intuitively the just coming departure time information with the eye based on a difference in the display mode, as shown in FIG.7, by the mobile information terminal that received the distributed timetable data.

In the above embodiment, such a configuration is employed that the present position information are acquired via the GPS system. But it is needless to say that the similar effect can be achieved by acquiring the position information that the terrestrial base station of the mobile phone transmits.
The present invention is explained in detail with reference to the particular embodiment. But it is apparent for those skilled in the art that various variations and modifications may be applied without departing from a spirit and a scope of the present invention.
This application is based upon Japanese Patent Application (Patent Application No.2004-033374) filed on February 10, 2004, the contents of which are incorporated herein by reference.

### Industrial Applicability

According to the information terminal, the timetable information display program, and the timetable information display method of the present invention, since the timetable information can be displayed partially by providing the selecting unit for selecting partially the timetable information after the time specified based on the time information from the timetable information, based on the compared result between the timetable information and the time information, an effect of capable of grasping exactly the timetable information that the user needs can be achieved. Therefore, the present invention is valuable for the information terminal capable of displaying the timetable information on the display portion, the timetable information display program, and the timetable information display method.

## Claims

1. An information terminal capable of displaying timetable information on a display portion, comprising:
a storing unit that stores the timetable information;
a time information acquiring unit that acquires time information;
a comparing unit that compares the timetable information with the time information;
a selecting unit that partially selects timetable information after a time specified by the time information from the timetable information, based on a compared result; and
a display controlling unit that causes the display portion to display the selected timetable information.

2. The information terminal according to claim 1, wherein the display controlling unit changes a display mode of the selected timetable information in response to a time difference from the time information.

3. The information terminal according to claim 1 or 2, further comprising:
a timetable information acquiring unit that acquires the timetable information.

4. The information terminal according to claim 3, wherein the timetable information acquiring unit reads the timetable information from image data via character recognition.

5. The information terminal according to any one of claims 1 to 4, further comprising:
a timetable information selecting unit that selects timetable information, which is compared with the time information, from the timetable information stored in the storing unit based on present position information and destination information.

6. A server for transmitting timetable information, comprising:
a transmitting unit that transmits timetable information after a time specified by time information from the timetable information that are partially selected from the timetable information based on a comparison between the timetable information and the time information.

7. A program of causing a display portion to display timetable information, causes a computer to execute respective functions as:
a comparing unit that compares the timetable information with time information;
a selecting unit that partially selects the timetable information after a time specified by the time information from the timetable information, based on a compared result; and
a display controlling unit that causes the display portion to display the selected timetable information.

8. The program according to claim 7, wherein the display controlling unit changes a display mode of the selected timetable information in response to a time difference from the time information.

9. A method of causing a display portion to display timetable information, comprising:
comparing the timetable information with time information;
selecting partially the timetable information after a time specified by the time information from the timetable information, based on a compared result; and
causing the display portion to display the selected timetable information.

10. A method of causing a display portion to display timetable information, comprising:
comparing the timetable information with time information;
selecting partially the timetable information after a time specified by the time information from the timetable information, based on a compared result;
changing a display mode of the selected timetable information in response to a difference from the time information as a criterion; and
causing the display portion to display the timetable information of which the display mode is changed.
